# EUROPEAN PATENT APPLICATION

(11) **EP 1 233 028 A1**
(43) Date of publication of application: **21.08.2002**
(21) Application number: 00962885.0
(22) Date of filing: 27.09.2000
(51) Int. Cl.: C08F 8/04, C08F 297/06, G11B 7/24

(54) **OPTICAL MATERIAL COMPRISING STAR-SHAPED HYDROGENATED POLYSTYRENE BLOCK COPOLYMER, PROCESS FOR PRODUCING THE SAME, AND SUBSTRATE FOR OPTICAL DISK**

(30) Priority: 28.09.1999 JP 27490399
(71) Applicant: TEIJIN LIMITED, Osaka-shi Osaka 541-0054 (JP); BAYER AG, 51368 Leverkusen (DE)
(72) Inventor: NITTA, Hideaki, Teijin Limited,, Iwakuni-shi, Yamaguchi 740-0014 (JP); YAMAURA, Michio, Teijin Limited,, Iwakuni-shi, Yamaguchi 740-0014 (JP); TAKEUCHI, Masaki, Teijin Limited,, Iwakuni-shi, Yamaguchi 740-0014 (JP); HASHIDZUME, Kiyonari, Teijin Limited,, Iwakuni-shi, Yamaguchi 740-0014 (JP); KOHNO, Kazuteru, Teijin Limited,, Iwakuni-shi, Yamaguchi 740-0014 (JP); IWATA, Kaoru, Teijin Limited,, Iwakuni-shi, Yamaguchi 740-0014 (JP); KIDO, Nobuaki, Teijin Limited,, Iwakuni-shi, Yamaguchi 740-0014 (JP); MATSUMURA, Shunichi, Teijin Limited,, Iwakuni-shi, Yamaguchi 740-0014 (JP)
(74) Representative: Carpmaels & Ransford
(86) International application number: JP0006661
(87) International publication number: WO01023437

(57) **Abstract**

An optical material comprising a hydrogenated product of a styrene-conjugated diene block copolymer. The styrene-conjugated diene block copolymer has a star-like branched structure consisting of a core and branched chains extending linearly therefrom, and each of the branched chains comprises a styrene component and a conjugated diene component. The styrene component and the conjugated diene component account for 70 to 99 wt% and 30 to 1 wt% of the total weight of the both components and the hydrogenated product is obtained by hydrogenating 90 mol% or more of all the double bonds of the styrene component and the conjugated diene component. Further, the above core is derived from an alkoxysilane or an aromatic hydrocarbon having at least two groups having a vinyl group as substituents. This optical material has excellent transparency and heat resistance and higher melt flowability and moldability than when a hydrogenated product having a linear structure is used without deteriorating mechanical properties.

## Description

### Field of the Invention

The present invention relates to an optical material comprising a hydrogenated polystyrene block copolymer having a star-like branched structure, a production process therefor and an optical disk substrate. More specifically, it relates to an optical material comprising the above copolymer having excellent transparency, heat resistance and moldability, a production process therefor and an optical disk substrate.

### Prior Art

Plastics used in optical materials such as optical disk substrates and optical lenses are required to have various characteristic properties such as optical isotropy (low birefringence), dimensional stability, weatherability and heat stability in addition to transparency. For the above optical applications, polycarbonates and polymethylmethacrylates have mainly been used. However, optical anisotropy readily occurs in moldings of the polycarbonates due to large intrinsic birefringence and the polymethylmethacrylates have poor dimensional stability due to extremely high water absorption as well as low heat resistance. The polycarbonates are mainly used in current optical disk substrates. However, along with recent progress made to increase the capacity of an optomagnetic recording disk (MOD) or recording density typified by the development of a digital versatile disk (DVD) and the development of a blue laser, the birefringence of the polycarbonates and the distortion of a disk caused by moisture absorption are now serious problems to be concerned about.

Under the above situation, the development of a polyolefin-based resin called "amorphous polyolefin" as a substitute for the polycarbonates is actively under way.

JP-B 7-114030 (the term "JP-B" as used herein means an "examined Japanese patent publication") discloses an optical disk substrate made from an amorphous thermoplastic resin which comprises 100 to 80 wt% of a vinylcyclohexane-based polymer containing 80 wt% or more of a vinylcyclohexane component in the molecular chain and 0 to 20 wt% of a vinyl aromatic polymer and having a total light transmission of 85 % or more, a water absorption coefficient of 0.1 wt% or less and a birefringence factor of 50 nm or less.

The above resin has such a big advantage that it can be produced at a lower cost than other amorphous polyolefins and such a disadvantage that it is brittle mechanically. To overcome this disadvantage, it is proposed that a hydrogenated product of a styrene-conjugated diene block copolymer obtained by block copolymerizing a conjugated diene such as isoprene or butadiene with styrene and introducing a rubber component into the block copolymer is used for optical applications such as optical disk substrates.

Japanese Patent No. 2,668,945 discloses an optical disk having a substrate made from a polyvinylcyclohexane-based resin having a vinyl aromatic hydrocarbon polymer segment content of 80 wt% or more, a nucleus hydrogenation rate of 80 % or more, a number average molecular weight of more than 50,000 and a softening point of 150° C or more.

Japanese Patent No. 2,725,402 discloses a vinyl hydrogenated product of aromatic hydrocarbon polymer composition comprising 1 wt% or more and less than 100 wt% of a polymer obtained by hydrogenating all the double bonds and 75 to 98 mol% of the aromatic nuclei in a vinyl aromatic hydrocarbon-conjugated diene block copolymer and 0 to 95 wt% of a polymer obtained by hydrogenating 80 mol% or more of all the aromatic nuclei in a vinyl aromatic hydrocarbon polymer and/or 0 to 20 wt% of a saturated hydrocarbon resin having a number average molecular weight of 500 to 5,000 and a softening point of 40°C or more.

Japanese Patent No. 2,730,053 discloses an optical disk substrate forming material made from a polyvinylcyclohexane-based block copolymer obtained by hydrogenating the aromatic ring of a styrene-based block copolymer containing 60 to 99 wt% of a styrene component and 40 to 1 wt% of a conjugated diene component and having a hydrogenation rate of 80 % or more.

Although the hydrogenated styrene-conjugated diene block copolymers disclosed by the above Japanese patents have the effect of improving mechanical brittleness by introducing a certain amount of a rubber component, when the amount of the rubber component is large, it may cause a reduction in heat resistance and phase separation due to aggregation with the result of deterioration in transparency.

In the field of optical disks, the recording density is increasing, and the reduction of birefringence and the replicability of a stamper shape are now being required more and more for the molding of a substrate. Therefore, for the injection molding of a polycarbonate, efforts are being made to reduce the melt viscosity of a resin in order to increase the flowability of the resin by increasing the molding temperature or reducing the molecular weight of the polycarbonate as much as possible. However, since the heat resistance of a hydrogenated polystyrene-based resin is not substantially higher than that of a polycarbonate, there is limitation to the increase of the molding temperature. If the molecular weight of the hydrogenated polystyrene-based resin is reduced too much, cracking readily occurs at the time of molding. Since the toughness is improved by using the above hydrogenated styrene-conjugated diene block copolymer, the flowability can be enhanced to a certain extent by making the molecular weight of the resin lower than that of the hydrogenated polystyrene, but this is not enough. Therefore, further improvement of flowability is desired while mechanical strength is retained.

A hydrogenated polystyrene-based resin which can satisfy the requirements for a high recording density optical disk substrate is not yet to be found.

It is an object of the present invention to provide a hydrogenated polystyrene-based resin material which can satisfy requirements for an optical material, particularly a high recording density optical disk substrate.

There is known a high impact polystyrene having a star-like branched structure so-called "radial type structure" consisting of a core and branched chains extending linearly therefrom as one of high impact polystyrenes obtained by copolymerizing styrene with isoprene or butadiene. As described above, various studies on use of hydrogenated products of styrene-based copolymers in optical materials have been made so far. All the copolymers are only copolymers having a linear structure and not a radial type structure. WO96/34896 proposes a hydrogenated product of a polystyrene-based star type block copolymer itself. However, the above publication fails to disclose the physical properties of the above hydrogenated product and is silent about its optical application.

### Summary of the Invention

It is an object of the present invention to provide a novel optical material.

It is another object of the present invention to provide an optical material comprising a hydrogenated polystyrene-based block copolymer having a star-like branched structure consisting of a core and branched chains extending linearly therefrom.

It is still another object of the present invention to provide an optical material which has excellent transparency and heat resistance, and higher melt flowability and moldability than an optical material having a linear structure without deterioration its mechanical properties.

It is a further object of the present invention to provide a process for producing the optical material of the present invention.

It is a still further object of the present invention to provide an optical disk substrate made from the optical material of the present invention.

Other objects and advantages of the present invention will become apparent from the following description.

According to the present invention, firstly, the above objects and advantages of the present invention are attained by an optical material comprising a hydrogenated product of a styrene-conjugated diene block copolymer having a star-like branched structure consisting of a core and branched chains extending linearly therefrom, each of the branched chains comprising a styrene component and a conjugated diene component in amounts of 70 to 99 wt% and 30 to 1 wt% based on the total weight of the both components, respectively, the hydrogenated product being obtained by hydrogenating 90 mol% or more of all the double bonds of the styrene component and the conjugated diene component.

According to the present invention, secondly, the above objects and advantages of the present invention are attained by a process for producing a hydrogenated product of a styrene-conjugated diene block copolymer, comprising the steps of:
anionically polymerizing monomers containing styrene and a conjugated diene to form a styrene-conjugated diene block copolymer having one active terminal;
coupling the active terminals of the styrene-conjugated diene block copolymers by means of an alkoxysilane or an aromatic hydrocarbon having at least two groups having a vinyl group as substituents to form a styrene-conjugated diene block copolymer having a star-like branched structure; and
hydrogenating the styrene-conjugated diene block copolymer having a star-like branched structure to form a hydrogenated product of the styrene-conjugated diene block copolymer having a star-like branched structure.

According to the present invention, thirdly, the above objects and advantages of the present invention are attained by an optical disk substrate made from the optical material of the present invention.

### Detailed Description of the Preferred Embodiment

The present invention will be described in detail hereinbelow. A description is first given of the optical material of the present invention.

The optical material of the present invention comprises a hydrogenated product of a styrene-conjugated diene block copolymer. This styrene-conjugated diene block copolymer has a star-like branched structure consisting of a core and branched chains extending linearly therefrom.

The number of the branched chains extending from the core which depends on the type of the core is at least 3, preferably 4 from the viewpoint of synthesis and physical properties. By using a polyfunctional core precursor having a functionality of more than 4, a polymer having a star-like structure with a large number of branched chains can be obtained. However, since synthesis becomes more difficult as the number of branched chains increases, a hydrogenated polystyrene-based block copolymer having 3 or 4 branched chains is preferred and a hydrogenated polystyrene-based block copolymer having 4 branched chains is more preferred in consideration of industrial-scale synthesis. A mixture of a hydrogenated polystyrene-based block copolymer having 3 branched chains and a hydrogenated polystyrene-based block copolymer having 4 branched chains may also be used. It may be inevitable that a low-molecular weight component having one branched chain is formed during synthesis and a small amount of the component having one branched chain may be contained. The amount of the component having one branched chain is preferably 30 wt% or less, more preferably 25 wt% or less. When the amount of the component having one branched chain is more than 30 wt%, the flowability of the obtained resin becomes high but a molded product thereof is extremely brittle, thereby making it difficult to attain the object of the present invention.

In the present invention, examples of the conjugated diene include isoprene, 1,3-butadiene, 2,3-dimethyl-1,3-butadiene, 1,3-pentadiene and 1,3-hexadiene. Out of these, isoprene and 1,3-butadiene are preferred from the viewpoints of polymerization activity and economy. They may be used alone or in combination of two or more. Styrene is used as another comonomer but another vinyl aromatic compound such as α-methylstyrene, 4-methylstyrene, 2-methylstyrene or vinylnaphthalene may be used in conjunction with styrene. The styrene-conjugated diene block copolymer comprises 70 to 99 wt%, preferably 75 to 98 wt%, more preferably 84 to 96 wt% of a styrene component and 1 to 30 wt%, preferably 2 to 25 wt%, more preferably 4 to 16 wt% of a conjugated diene component based on the total weight of the styrene component and the conjugated diene component.

To improve mechanical properties such as impact resistance, the amount of the conjugated diene component is preferably as large as possible. However, if the amount is too large, the aggregation or crystallization of the conjugated diene component will readily occur with the result of deterioration in transparency and heat resistance. When the amount of the conjugated diene component is smaller than 1 wt%, the obtained product becomes brittle due to insufficient toughness.

In the present invention, the branched chains of the styrene-conjugated diene block copolymer preferably have a styrene block at a free terminal, namely, a terminal not bonded to the core.

The core is preferably derived from an alkoxysilane or an aromatic hydrocarbon having at least two groups having a vinyl group as substituents, more preferably an alkoxysilane.

The hydrogenated product of the present invention is obtained by hydrogenating the double bonds and aromatic rings of the above styrene-conjugated diene block copolymer. That is, the hydrogenated product is obtained by hydrogenating 90 mol% or more, preferably 98 mol% or more of the total of all the double bonds of the aromatic ring of the styrene component and all the double bonds of the conjugated diene component. The rate of hydrogenation, that is, hydrogenation rate means the hydrogenation rate of the total of double bonds and aromatic rings contained in the copolymer by converting the aromatic rings into the number of mols in terms of the double bond. For example, in the case of a copolymer comprising styrene, a phenyl group at an unhydrogenated styrene site is calculated as 3 mols of the double bond. Generally speaking, double bonds derived from a conjugated diene site are much more easily hydrogenated than aromatic rings and almost completely hydrogenated in the present invention. Meanwhile, in the case of unhydrogenated aromatic rings, most of the aromatic rings remain as they are but a small number of aromatic rings are partly hydrogenated to become double bonds.

In the present invention, the hydrogenated product is obtained by hydrogenating 90 to 99.5 mol% of all the double bonds of the styrene component and the conjugated diene component of the styrene-conjugated diene block copolymer and has substantially no signal having a peak at 6.3 to 6.8 ppm in its ¹H-NMR spectrum measured at room temperature in deuterochloroform. The expression "substantially no signal having a peak at a chemical shift range of 6.3 to 6.8 ppm" means that the ratio of the total integral intensity of a signal having a peak at 6.3 to 6.8 ppm to the total integral intensity of a signal having a peak at 0.0 to 2.0 ppm is 0.5 % or less. When the hydrogenated product has a signal having a ratio of more than 0.5 %, the total light transmission at 400 nm in toluene of a resin having a hydrogenation rate of, for example, 96 % greatly drops to 40 %. The peak at 0.0 to 2.0 ppm is the peak of an alicyclic polyolefin. The signal existent at 6.3 to 6.8 ppm is attributed to the chains of an unhydrogenated aromatic olefin having 10 or more long units (N. Kato et al., Analytical Science, vol. 7 (supplement), pp. 1605, 1991). An alicyclic polyolefin which shows a signal having a peak at the above range tends to have extremely low transparency even though it has a high hydrogenation rate of aromatic ring. Generally speaking, the hydrogenation reaction of a polymer using a homogeneous catalyst proceeds at random. Therefore, when the hydrogenation rate is high at 90 % or more, it is hardly believed that the chains of an unhydrogenated aromatic olefin unit are long. It is known that when a solid catalyst is used, the hydrogenation reaction does not take place at random and the molecules of the polymer tend to be hydrogenated one by one (F.S. Bates, J. Am. Chem. Soc. vol. 110, pp. 3542, 1988).

The hydrogenated product of a styrene-conjugated diene block copolymer constituting each branched chain of the hydrogenated product preferably has a number average molecular weight (Mn) measured by GPC of 30,000 to 70,000.

The reduced viscosity ηₛₚ/c measured at 30° C in a toluene solution having a concentration of 0.5 g/dL of the hydrogenated product is preferably in the range of 0.2 to 0.65.

The styrene-conjugated diene block copolymer in the present invention may be polymerized by known processes per se such as anionic polymerization using organic lithium as an initiator.

To synthesize a polymer having a star-like branched structure, the following two processes are generally employed. One is a process in which a polyfunctional compound is used as a polymerization initiator and polymerization is carried out in a radial manner from the initiator as a core. The other is a process in which a linear polymer is polymerized and a polymerization active terminal at one terminal of the polymer is coupled by a polyfunctional coupling agent. The process using a polyfunctional polymerization initiator has such an advantage that a star-like branched structure of interest is easily obtained though an expensive initiator must be used. On the other hand, the process for coupling after polymerization has such an advantage that the polymer can be produced at a low cost though there is a possibility that a perfect star-like polymer may not be obtained due to incomplete coupling, depending on conditions. In the present invention, a star-like block copolymer can be synthesized by both processes but the latter process is preferred from the viewpoints of synthesis ease and economy.

That is, one of the preferred processes for synthesizing the star-like block copolymer of the present invention is as follows. The production process of the present invention will be described hereinbelow.

In the production process of the present invention, a styrene-conjugated diene block copolymer is first synthesized from styrene and a conjugated diene using a known anionic polymerization initiator such as organic lithium. Then, one active terminal of the copolymer is coupled by using a coupling agent to form a star-like branched structure and then this star-like copolymer is hydrogenated.

In the above synthesis process, the polymerization reaction is generally carried out using a hydrocarbon-based solvent. Examples of the hydrocarbon-based solvent include aliphatic hydrocarbons such as pentane, hexane, heptane, octane and decane; alicyclic hydrocarbons such as cyclopentane, cyclohexane, methylcyclohexane and cyclooctane; and aromatic hydrocarbons such as benzene, toluene and xylene. Out of these hydrocarbon-based solvents, cyclohexane and methylcyclohexane are preferred from the viewpoints of solubility and reactivity.

Besides the above hydrocarbon-based solvents, a polar solvent may be used to control a polymerization reaction and the micro-structure of the conjugated diene component. Examples of the polar solvent include ethers such as tetrahydrofuran, dioxane, diethylene glycol dimethyl ether, diethyl ether, methyl ethyl ether and methyl t-butyl ether; amines such as triethylamine and tetraethyl ethylene diamine; and phosphines.

An organic lithium compound is generally used as the anionic polymerization initiator used for polymerization. Examples of the organic lithium compound include ethyl lithium, n-propyl lithium, isopropyl lithium, n-butyl lithium, sec-butyl lithium and tert-butyl lithium. Out of these, n-butyl lithium and sec-butyl lithium are preferred from the viewpoint of acquisition ease and capability of initiating a polymerization reaction. When an organic lithium compound is used, the polymerization temperature is preferably -20 to 120°C, more preferably 10 to 100°C. Polymerization must be carried out in an inert atmosphere such as nitrogen or argon to prevent the deactivation of the catalyst and the active terminal of the polymer during polymerization. The polymerization reaction ends in several minutes to several hours, which depends on the concentration and type of the initiator used and a copolymer is obtained almost quantitatively based on the charge ratio of the monomers.

In the polymerization step, the final star-like branched structure changes according to how to copolymerize styrene with a conjugated diene. Generally speaking, when anionic polymerization is carried out in the presence of both styrene and the conjugated diene, the conjugated diene is first polymerized before styrene because the conjugated diene has higher reactivity than styrene and one active terminal is existent in the styrene component at the end of the polymerization reaction. Therefore, when the star-like branched structure is constructed by coupling, the conjugated diene component is located in an outer portion of the star-like branched structure and the styrene component is located in an inner portion of the above structure. To obtain the opposite structure, only styrene is first added at the time of polymerization to be completely polymerized and then the conjugated diene is added during the polymerization reaction so that one active terminal is existent in the conjugated diene component at the end of the reaction.

In the present invention, a star-like structured copolymer obtained by the latter process in which a styrene component is situated in an outer portion of the structure provides a molded product having higher mechanical strength and the copolymer in which an active terminal is existent in a conjugated diene component is preferred from the viewpoint of synthesis because a coupling reaction is easier than when an active terminal is existent in a styrene component. A block copolymer in which the styrene component and the conjugated diene component are completely separate from each other is obtained by the latter process compared with when polymerization is carried out in the presence of styrene and a conjugated diene. The copolymer is advantageous in terms of heat resistance and impact resistance because a micro-phase separation structure appears distinctly, which satisfies the object of the present invention. When the phase separation structure becomes distinct, it is disadvantageous in terms of transparency but it is easy to suppress a reduction in transparency because the domain size can be made smaller when a star-like branched structure is constructed as in the present invention than when a linear structure is constructed.

The coupling reaction is carried out by adding a polyfunctional compound as a coupling agent to a reaction solution obtained after the polymerization reaction of all the monomers. The polyfunctional compound can react with and bind to an active lithium terminal of the copolymer, as exemplified by chlorosilanes such as tetrachlorosilane, trichloro(methyl)silane, bis(trichlorosilyl)methane, bis(trichlorosilyl)ethane and bis(trichlorosilyl)hexane; diester compounds such as dimethyl terephthalate, dimethyl isophthalate, dimethyl oxalate, diethyl malonate and diethyl adipate; triester compounds such as tri-2-ethylhexyl trimellitate; and acid anhydrogenated product compounds such as trimellitic anhydrogenated product and pyromellitic dianhydrogenated product. Further, an alkoxysilane compound is more preferred as a coupling agent in the present invention. The alkoxysilane compound is a compound represented by the following formula (I), (II) or (III).

Si(OR¹)ₘR² ₄₋ₘ (I)

R² ₃₋ₙ(OR¹)ₙ Si₂(OR¹)ₙR² ₃₋ₙ (II)

R³(Si(OR¹)ₙ R² ₃₋ₙ)₂ (III)

In the above formulas (I) to (III), R¹ and R² are the same or different and each an alkyl group having 1 to 8 carbon atoms or aryl group having 6 to 18 carbon atoms, R³ is an alkylene group having 1 to 10 carbon atoms, m is 3 or 4, and n is 2 or 3.

R¹ and R² in the alkoxysilane compound represented by the above formula (I), (II) or (III) are preferably an alkyl group such as methyl, ethyl, propyl or butyl, or aryl group such as phenyl. R³ is preferably an alkylene group such as methylene, ethylene or 1,6-hexylene.

Specific examples of the alkoxysilane compound include alkoxysilanes such as tetramethoxysilane, tetraethoxysilane, tetraphenoxysilane, trimethoxy(methyl)silane, bis(trimethoxysilyl)ethane, bis(triethoxysilyl)ethane, bis(trimethoxysilyl)hexane, bis(triethoxysilyl)methane and hexamethoxydisilane. Out of these, tetraalkoxysilanes such as tetramethoxysilane and tetraethoxysilane are preferred from an economical point of view because they are inexpensive and an alkoxysilane compound having a functionality of 6 such as bis(trimethoxysilyl)ethane is preferred because it readily reacts with a polymer to form a star-like branched structure having 4 branches easily.

Since the alkoxysilanes generate an alcohol through a coupling reaction, there is no possibility that a high-pressure hydrogenating equipment is corroded by an acid unlike the case where chlorosilane is used for a hydrogenation reaction in the subsequent step. Therefore, the alkoxy silanes are advantageously used in the present invention.

In the present invention, an aromatic hydrocarbon having at least two groups having a vinyl group as substituents may also be used as a preferred coupling agent.

The aromatic hydrocarbon is preferably a compound represented by the following formula (IV): 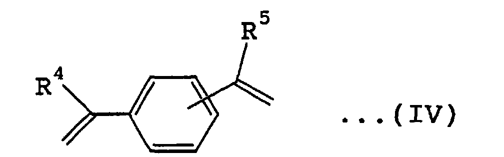 wherein R⁴ and R⁵ are each independently a hydrogen atom, alkyl group having 1 to 10 carbon atoms or phenyl group.

The alkyl group having 1 to 10 carbon atoms may be selected in consideration of an effect as a branching agent and production ease. Illustrative examples of the alkyl group represented by R⁴ and R⁵ include methyl group, ethyl group, n-propyl group, isopropyl group, n-butyl group, sec-butyl group, isobutyl group and tert-butyl group. Examples of the compound include divinylbenzene, diisopropenylbenzene, diisobutenylbenzene, diisopentanylbenzene, diisohexanylbenzene, diisoheptanylbenzene and diisooctanylbenzene. Out of them, divinylbenzene and diisopropenylbenzene are preferred because they are easily acquired. The amount of the branching agent is 0.1 to 30 times, preferably 0.3 to 25 times, more preferably 1.0 to 15 times the molar amount of the active terminal of the polymer. When the amount of the branching agent is more than 30 times, gelation occurs disadvantageously. When the branching agent of the present invention is used in the above range, a branched structure is obtained at a high conversion without causing gelation and the decomposition of branched chains during hydrogenation can be minimized. Therefore, an optical material having high optical transparency, low birefringence and low water absorption can be easily obtained.

The coupling reaction is carried out at preferably -20 to 150° C, more preferably 10 to 120° C, which depends on the type of the coupling agent used. When the reaction temperature is lower than -20° C, the coupling reaction hardly proceeds and when the reaction temperature is higher than 150°C, the active terminal of the copolymer is easily deactivated before the coupling reaction disadvantageously.

The hydrogenation reaction may be carried out after the copolymer obtained by the coupling reaction is isolated but may be carried out in a solution state after the coupling reaction, which is preferred from an economical point of view. The hydrogenating catalyst used in the present invention is not particularly limited and a known catalyst capable of nucleus hydrogenation of an aromatic ring may be used. Examples of the hydrogenating catalyst include solid catalysts having a precious metal such as nickel, palladium, platinum, cobalt, ruthenium or rhodium, or a compound such as an oxide, salt or complex thereof carried on a porous carrier such as carbon, alumina, silica, silica·alumina or diatomaceous earth. Out of these, solid catalysts having nickel, palladium or platinum carried on alumina, silica, silica·alumina or diatomaceous earth are preferred because of high reactivity. The hydrogenation catalyst is used in an amount of 0.5 to 40 wt% based on the copolymer, which depends on the activity of the catalyst.

The preferred hydrogenation reaction conditions include a hydrogen pressure of 2.9 to 24.5 MPa (30 to 250 kgf/cm²) and a reaction temperature of 70 to 250° C. When the reaction temperature is too low, the reaction hardly proceeds and when the reaction temperature is too high, the molecular weight is readily reduced by the disconnection of the molecular chain. To prevent a reduction in molecular weight caused by the disconnection of the molecular chain and promote the reaction smoothly, a hydrogenation reaction is preferably carried out at an appropriate temperature and an appropriate hydrogen pressure which are suitably determined by the type and concentration of the catalyst used, the concentration of the copolymer solution and the molecular weight of the copolymer.

A solvent which does not become a catalytic poison for a hydrogenation catalyst is preferably selected as the solvent used for a hydrogenation reaction, and saturated aliphatic hydrocarbons such as cyclohexane and methyl cyclohexane used as a solvent for a polymerization reaction are preferred. To improve reactivity or suppress a reduction in molecular weight caused by the disconnection of the molecular chain, a polar solvent such as an ether, ester or alcohol exemplified by tetrahydrofuran, dioxane and methyl t-butyl ether may be added to the above solvent in limits that do not prevent the solubility of the copolymer. In the present invention, hydrogenation is preferably carried out without isolating the copolymer in a solution state after polymerization and coupling reactions. Therefore, the hydrogenation reaction may be carried out in the solution right after the polymerization reaction or in a solvent system including a required polar solvent.

In the present invention, the hydrogenation reaction is preferably carried out when the concentration of the copolymer is 3 to 50 wt% in the above solvent system. When the concentration of the copolymer is lower than 3 wt%, it is not preferred from the viewpoints of productivity and economy and when the concentration of the copolymer is higher than 50 wt%, the viscosity of the solution becomes too high which is not preferred from the viewpoints of handling and reactivity.

The hydrogenation rate of the copolymer in the present invention is 90 mol% or more, preferably 98 mol% or more, more preferably 99 mol% or more. When the hydrogenation rate is lower than 90 mol%, there arise such problems as reductions in the transparency and heat resistance of the obtained hydrogenated copolymer and an increase in the birefringence of a molded product. The hydrogenation rate is desirably as high as possible but it is determined in consideration of the physical properties of the obtained hydrogenated copolymer and economy including equipment and operation costs of the hydrogenation step required for attaining the above hydrogenation rate.

After the end of the hydrogenation reaction, the catalyst may be removed by a known post-processing method such as centrifugation or filtration. In the present invention in which the obtained copolymer is used for optical application, the content of each residual catalytic metal component in the resin must be reduced as much as possible. The amount of each residual catalytic metal is preferably 10 ppm or less, more preferably 1 ppm or less, much more preferably 500 ppb or less. The hydrogenated copolymer of interest can be obtained from the polymer solution from which the hydrogenation catalyst has been removed by the evaporation, stripping or re-precipitation of the solvent.

The molecular weight of the thus obtained hydrogenated polystyrene-based block copolymer is obtained by multiplying the molecular weight of each branched chain with the number of branches. The molecular weight of each branched chain can be adjusted by the amount of organic lithium which is a polymerization catalyst based on the total amount of the monomers charged for anionic polymerization and the number of branches can be adjusted by the type of the coupling agent used for a coupling reaction and reaction conditions. The number average molecular weight in terms of polystyrene (Mn) measured by GPC (Gel Permeation Chromatography) of the hydrogenated product used in the optical material of the present invention is preferably 30,000 to 1,000,000, more preferably 50,000 to 800,000, much more preferably 80,000 to 500,000 in consideration of the mechanical strength of a molded product and moldability at the time of molding, which depends on the number of branched chains and the amount of the conjugated diene component. When the number average molecular weight of the star-like branched polymer is lower than 30,000, mechanical strength becomes unsatisfactory and when the number average molecular weight is higher than 1,000,000, melt viscosity becomes too high, resulting in poor flowability and making molding difficult. When the star-like branched polymer is actually synthesized, it may be a mixture of a polymer having 3 branched chains and a polymer having 4 branched chains or a mixture with a polymer having one uncoupled branched chain. Therefore, it is necessary to know the molecular weight of a whole mixture from the reduced viscosity measured in a diluted solution. In the present invention, the reduced viscosity ηₛₚ/c measured at 30°C in a toluene solution having a concentration of 0.5 g/dL is 0.1 to 10 dL/g, preferably 0.2 to 3 dL/g.

In the present invention, the content of foreign substances in the hydrogenated polystyrene-based block copolymer is preferably low. That is, the number of foreign substances having a particle diameter of 0.5 µm or more is 20,000/g or less, preferably 10,000/g or less, more preferably 5,000/g or less. The term "foreign substances" means all the substances not compatible with the hydrogenated polystyrene-based block copolymer, such as impurities contained in the raw materials, impurities contained in the production step, gelled product of the polymer, the residual polymerization catalyst, the residual hydrogenation catalyst and the like. When the number of foreign substances having a particle diameter of 0.5 µm or more is larger than 20,000/g and a high-density recording optical disk substrate is molded from the resin, the recording and reproduction characteristics of the disk deteriorate due to a high bit error rate.

The foreign substances can be effectively removed by filtration in each production step or by producing pellets in a clean room.

When a high-temperature high-humidity test is made on the molded product in the present invention, the molded product may be slightly turbid. In this case, 0.01 to 5 wt% of a turbidness preventing agent is preferably added to the hydrogenated polystyrene-based block copolymer. The amount of the agent is more preferably 0.03 to 2 wt%. The turbidness preventing agent is a partial ether compound of a polyhydric alcohol or a partial ester compound of a polyhydric alcohol. The partial ether compound of a polyhydric alcohol is obtained by substituting at least one hydroxyl group of the polyhydric alcohol by an ether bond. The partial ester compound of a polyhydric alcohol is obtained by substituting at least one hydroxyl group of the polyhydric alcohol by an ester bond. Examples of the compounds include glycerin monostearate, glycerin monolaurate, pentaerythritol monostearate and pentaerythritol distearate. Additives such as a heat resistant stabilizer, releasing agent, lubricant, plasticizer and ultraviolet light absorber may be added to the hydrogenated styrene-conjugated diene copolymer as required in the present invention.

In the present invention, the hydrogenated styrene-conjugated diene copolymer having a star-like branched structure may be used alone but a resin composition obtained by blending the above copolymer with hydrogenated polystyrene may be used according to purpose. Use of inexpensive polystyrene as a raw material gives a great economical advantage to the present invention. Hydrogenated polystyrene has high compatibility with the hydrogenated copolymer of the present invention and there is no limitation to the blending ratio. Solutions of these substances before hydrogeneration may be mixed together and hydrogenated at the same time, or they may be hydrogenated separately and the obtained reaction solutions may be mixed together. By mixing as described above, there can be provided a resin composition having improved flowability of hydrogenated polystyrene and suppressed reduction in mechanical strength.

That is, according to the present invention, there is provided an optical material comprising a resin composition which contains (a) the above hydrogenated product of the present invention in an amount of 20 to 80 wt% and (b) hydrogenated polystyrene obtained by hydrogenating 90 mol% or more of the unsaturated bonds of the aromatic rings of polystyrene in an amount of 80 to 20 wt% based on the total weight of the hydrogenated product (a) and the hydrogenated polystyrene (b).

Preferably, 0.01 to 5 wt% of a turbidness preventing agent is added to the above resin composition like the hydrogenated styrene-conjugated diene copolymer alone, or the copolymer having 20,000 or less foreign substances having a particle diameter of 0.5 µm or more per g is used.

A stabilizer typified by hindered phenol-based stabilizers such as Irganox 1010 and Irganox 1076 (of Ciba Specialty Chemicals Co., Ltd.), Sumilizer GS and Sumilizer GM (of Sumitomo Chemical Co., Ltd.) and phosphite-based stabilizers such as Irgaphos 168 (of Ciba Specialty Chemicals Co., Ltd.) is preferably added to the above hydrogenated product and the resin composition thereof in the present invention to improve heat stability at the time of melt molding. Further, additives such as a releasing agent exemplified by long-chain aliphatic alcohols and long-chain aliphatic esters, lubricant, plasticizer, ultraviolet light absorber and antistatic agent may be added as required.

The optical molding material (including the above resin composition) containing the above hydrogenated product of the present invention preferably has a heat distortion temperature of 90°C or more.

The optical material of the present invention may be molded by a known molding method such as injection molding, extrusion molding or solution casting. The optical material can be advantageously used for the production of an optical disk substrate by injection molding. An optical disk substrate is injection molded at a temperature of 270 to 350° C.

According to the present invention, there is provided an optical material comprising a hydrogenated polystyrene-based block copolymer having a star-like branched structure. Since this optical material has excellent transparency, heat resistance and melt flowability, it can be advantageously used as a material for an optical disk substrate.

### Examples

The following examples are provided for the purpose of further illustrating the present invention but are in no way to be taken as limiting.

### Used solvent and catalyst:

Cyclohexane, methyl t-butyl ether (solvent), styrene and isoprene which have been purified by distillation and fully dried were used.

A 1.57 M n-hexane solution of n-butyl lithium and a 1.00 M n-hexane solution of sec-butyl lithium were purchased from Kanto Kagaku Co., Ltd. and used directly.

Tetramethoxysilane was purchased from Shin-Etsu Chemical Co., Ltd. and bis(trimethoxysilyl)ethane was purchased from Aldrich Co., Ltd. to prepare 3.0 wt% cyclohexane solutions thereof, and a molecular sieve 4A was inserted into the solutions to fully dehydrate the above substances.

An Ni/silica·alumina catalyst (65 wt% of Ni carried) and a Pd/alumina catalyst (1 wt% of Pd carried) were purchased from Aldrich Co., Ltd. and used directly.

The measurement of physical properties was conducted in Examples and Reference Examples in accordance with the following methods.
glass transition temperature (Tg) : This is measured with the 2920 DSC of TA Instruments Co., Ltd. by elevating the temperature at a rate of 20°C/min.
reduced viscosity: The reduced viscosity ηₛₚ/c is measured in a toluene solution having a concentration of 0.5 g/dL at 30° C.
number average molecular weight: This is measured by gel permeation chromatography (Shodex System-11 GPC of Showa Denko K.K.) using THF as a solvent and calculating the molecular weight in terms of polystyrene from the measurement data.
hydrogenation rate: This is determined by ¹H-NMR measurement using the JNM-A-400 nuclear magnetic resonance absorber of JEOL Ltd.
melt viscosity: This is measured with the Koka-type (capilary-type) flow tester of Shimadzu Corporation to calculate melt viscosities at shear rates of 10²s⁻¹ and 10³s⁻¹. amount of residual catalytic metal in resin: This is determined by ICP emission spectral analysis.
total light transmission: This is measured with the UV-240 ultraviolet/visible spectroscope of Shimadzu Corporation. haze value: This is measured with the UDH-20D automatic digital haze meter of Nippon Denshoku Kogyo Co., Ltd.
Izod impact strength: This is measured by conducting notched and notchless impact tests on a molding sample using the UF IMPACT TESTER of Kamishima Seisakusho Co., Ltd.

The molding of disk substrates and the evaluation of physical properties of molded disks were carried out using the following equipment and mold.
molding of disk substrates: 0.6 mm thick disk substrates are molded by injection compression molding using an injection molding machine (MO40D3H of Nissei Jushi Kogyo Co., Ltd.), a DVD mold having a disk diameter of 120 mm and a stamper having a land-groove structure (stamper based on DVD-RAM standards and having a one-side recording capacity of 2.6 GB).
replicability: The sectional form of a disk at a radius of 58 mm from the center of the disk is measured with Atomic Force Microscope (SFA-300 of Seiko Instruments Inc.) to evaluate this from its land-groove shape.
retardation: This is measured in a single path at a radius of 23 mm from the center of the disk at angles of 0° and 30° from the vertical direction of the substrate using the ADR200B automatic birefringence measuring instrument of Oak Seisakusho Co., Ltd.
HDT (Heat Distortion Temperature): This is measured by the following procedure in accordance with JIS K7207. A test sample having a width of 4.00 mm, a height of 12 mm and a length of 110 mm is prepared and supported at two points whose interval is 100 mm and a load of 181.3 N/cm² is applied to the center portion between the two points. A room surrounding the test sample is filled with silicon oil and heated at a temperature elevation rate of 2° C/min. The temperature at which the amount of distortion of the test sample reaches 0.27 mm is measured.
high-temperature high-humidity test: A molded article is left at a temperature of 80°C and a humidity of 85 %Rh for 500 hours and the total light transmissions of the article before and after this are measured.
determination of the number of foreign substances: The polymer is dissolved in fully purified cyclohexane and the number of foreign substances contained in the polymer are obtained using a fine particle counter by the laser diffraction/scattering method.

### Example 1

After the inside of a 5-liter stainless steel autoclave was fully dried and substituted by nitrogen, 1,200 g of cyclohexane, 800 g of methyl t-butyl ether and 360 g of styrene were fed to the autoclave. Subsequently, 8.1 mmols of n-butyl lithium in the form of a 1.57 M cyclohexane solution was added to start polymerization. After styrene was completely reacted by stirring at 30° C for 1.5 hours, 40 g of isoprene was added to further carry out the reaction at 30° C for 1.5 hours. Then, 0.27 g of tetramethoxysilane was added as a 3.0 wt% cyclohexane solution and the temperature was raised to 60° C to carry out a coupling reaction. 3 hours after the start of the coupling reaction, 5 ml of ethanol was added. To this copolymer solution was added 70 g of an Ni/silica·alumina catalyst (65 wt% of Ni carried) to carry out a hydrogenation reaction at a hydrogen pressure of 9.81 MPa (100 kgf/cm²) and a temperature of 180° C for 6 hours. After the temperature was returned to room temperature and the inside of the autoclave was fully substituted by nitrogen, the solution was taken out from the autoclave and filtered with a membrane filter having a pore diameter of 0.1 µm (Fluoropore of Sumitomo Electric Industries, Ltd.) under pressure to obtain an achromatic transparent solution. 0.5 wt% based on the polymer of Sumirizer GS as a stabilizer and 0.2 wt% based on the polymer of glycerin monostearate as a turbidness preventing agent were added to this solution. This resulting solution was heated and depressurized in a sealed system to prevent entry of foreign matter from the outside so as to distill off the solvent and then pelletized using an extruder having an outlet port existent in a clean room to obtain an achromatic transparent polymer. The polymer had a reduced viscosity ηₛₚ/c of 0.48 dL/g which was measured at 30°C in a toluene solution having a concentration of 0.5 g/dL. When the polymer was measured by GPC, it was found that the polymer was a mixture of 83 % of a polymer having 4 branched chains and 17 % of a polymer having one uncoupled branched chain and a number average molecular weight of 48,000. When the hydrogenation rate of the obtained polymer was measured by ¹H-NMR, it was 99 mol%. A signal having a peak at 6.3 to 6.8 ppm was not observed in the ¹H-NMR spectrum of the polymer. As for the residual catalytic metals contained in the polymer measured by ICP emission spectral analysis, it was found that the polymer contained less than 1 ppm of each of the residual catalytic metals, that is, 0.23 ppm of Ni, 0.22 ppm of Al and 0.15 ppm of Si. The melt viscosity measured at 300° C was 240 Pa·s at a shear rate of 10²s⁻¹ and 85 Pa·s at a shear rate of 10³s⁻¹. When the polymer was dissolved in cyclohexane to determine the number of foreign substances having a particle diameter of 0.5 µm or more, it was 3,800/g. The glass transition temperature measured by DSC was 148°C. Then, the polymer was injection molded at a cylinder temperature of 300°C and a mold temperature of 80° C. When a 2 mm-thick disk obtained by this molding was measured, it had a total light transmission of 91 % and a haze value of 1.6 % and hence had sufficiently high transparency for use in an optical material. When a high-temperature high-humidity test was conducted on this disk at a temperature of 80° C and a humidity of 85 %Rh for 500 hours, the transparency of the disk did not change. When an Izod impact test was conducted to measure the impact resistance of the molded product of the polymer, it was 1.2 kJ/m² (notched) and 5.6 kJ/m² (notchless). The heat distortion temperature (HDT) was 105°C. The above results are shown in Table 1.

### Example 2

After the inside of a 5-liter autoclave used in Example 1 was fully dried and substituted by nitrogen, 2,100 g of cyclohexane and 350 g of styrene were fed to the autoclave. Subsequently, 6.7 mmols of sec-butyl lithium was added as a 1.57M cyclohexane solution to start polymerization. After styrene was completely reacted by stirring at 30°C for 1.5 hours, 27 g of isoprene was added to further carry out the reaction at 30° C for 1.5 hours. 0.31 g of tetramethoxysilane was then added as a 3.0 wt% cyclohexane solution and the temperature was elevated to 60° C to carry out a coupling reaction. 3 hours after the start of the coupling reaction, 5 ml of ethanol was added. To this copolymer solution was added 30 g of a Pd/alumina catalyst (1 wt% of Pd carried) to carry out a hydrogenation reaction at a hydrogen pressure of 9.8 MPa (100 kgf/cm²) and a temperature of 180° C for 12 hours. Thereafter, a post-treatment was carried out in the same manner as in Example 1 to obtain a hydrogenated styrene-isoprene copolymer. The physical properties of the resin and its molded product are shown in Table 1.

### Example 3

Polymerization, coupling and hydrogenation reactions were carried out in the same manner as in Example 2 to obtain a hydrogenated styrene-isoprene copolymer except that the amounts of monomers used for polymerization were changed to 340 g of styrene and 60 g of isoprene, the amount of sec-butyl lithium added as a polymerization initiator was changed to 8.1 mmols, and 0.50 g of bis(trimethoxysilyl)ethane was added as a coupling agent. The physical properties of the resin and its molded product are shown in Table 1. Although bis(trimethoxysilyl)ethane is a coupling agent having a functionality of 6, it served as a tetrafunctional coupling agent and a polymer having a 4-branched structure was obtained due to its steric hindrance.

**Table 1**

| | Ex. 1 | Ex. 2 | Ex. 3 |
|---|---|---|---|
| ratio of branched chain components of star-like branched structure copolymer (ratio of 4/3/2/1 branched components) | 83/0/0/17 | 0/82/0/18 | 85/0/0/15 |
| ηₛₚ/c (dl/g) | 0.48 | 0.52 | 0.47 |
| Tg (° C ) | 148 | 150 | 149 |
| HDT(°C) | 105 | 106 | 103 |
| hydrogenation rate (mol%) | 99 | 99 | 100 |
| melt viscosity | | | |
| shear rate 10²s⁻¹ (Pa·s) | 240 | 330 | 210 |
| 10³s⁻¹(Pa·s) | 85 | 95 | 75 |
| light transmission (%) | 91 | 92 | 92 |
| haze value(%) | 1.6 | 1.9 | 1.5 |
| Izod impact strength | | | |
| notched (kJ/m²) | 1.2 | 1.3 | 1.2 |
| notchless (kJ/m²) | 5.6 | 6.1 | 4.9 |
| Ex. = Example | | | |

### Example 4

After the inside of a 500-ml stainless steel autoclave was fully dried and substituted by nitrogen, 207 g of cyclohexane and 57 g of styrene were fed to the autoclave. Subsequently, 5.3 mmols of sec-butyl lithium was added to start polymerization. After styrene was completely reacted by stirring at 50° C for 2.0 hours, 3.0 g of isoprene was added to continue the reaction at 50°C for 2.0 hours. 32 mmols of divinylbenzene was added to further continue the reaction at 50° C for 2.0 hours. 1 ml of ethanol was added to obtain a radial type styrene-isoprene block copolymer. It was found from GPC measurement that this copolymer was a mixture of 91 % of a radial component and 9 % of a component (arm) corresponding to one branched chain. 130 g of the copolymer solution was collected, and 70 g of cyclohexane, 5.0 g of an Ni/silica·alumina catalyst (65 wt% of Ni carried) and 38 g of methyl t-butyl ether were added to the copolymer solution to carry out a hydrogenation reaction at a hydrogen pressure of 9.8 MPa (100 kgf/cm²) and a temperature of 180° C for 5 hours. The stirring speed was 800 rpm. After the temperature was returned to room temperature and the inside of the autoclave was fully substituted by nitrogen, the solution was taken out from the autoclave and filtered with a membrane filter having a pore diameter of 0.1 µm (Fluoropore of Sumitomo Electric Industries, Ltd.) under pressure to obtain an achromatic transparent solution. The formation of a gel was not seen at this point. It was found from GPC measurement that the copolymer was a mixture of 87 % of a radial component and 13 % of a component (arm) corresponding to one branched chain. The Irganox 1010 (of Ciba Specialty Chemical Co., Ltd.) was added as a stabilizer to the solution in an amount of 0.5 wt% based on the polymer and the solvent was distilled off by vacuum concentration and flushing to obtain a bulk achromatic transparent hydrogenated styrene-isoprene copolymer. The polymer had a reduced viscosity ηₛₚ/c of 0.21 dL/g which was measured at 30° C in a toluene solution having a concentration of 0.5 g/dL. When the hydrogenation rate was measured from the ¹H-NMR spectrum, it was 99.5 mol%. The glass transition temperature measured by DSC was 139° C. The characteristic properties of this polymer are shown in Table 2. This polymer was injection molded at a cylinder temperature of 300° C and a mold temperature of 80° C to obtain a 2 mm thick disk. The disk had a total light transmission of 91 % and a haze value of 1.5 %. Thus, it had sufficiently high transparency for optical application.

**Table 2**

| | ηₛₚ/c (dL/g) | hydrogenation rate (%) | area ratio (%) | | | |
|---|---|---|---|---|---|---|
| | | | before hydrogenation | | after hydrogenation | |
| | | | arm | radial | arm | radial |
| Ex. 4 | 0.21 | 99.5 | 9 | 91 | 13 | 87 |
| Ex. = Example | | | | | | |

### Example 5

After the inside of a 10-liter stainless steel autoclave was fully dried and substituted by nitrogen, 4,100 g of cyclohexane and 905 g of styrene were fed to the autoclave. Thereafter, 20.3 mmols of sec-butyl lithium was added to start polymerization. After styrene was completely reacted by stirring at 45° C for 2.0 hours, 114 g of isoprene was added to continue the reaction at 50°C for 2.0 hours. 0.65 g of tetramethoxysilane was added and the temperature was raised to 55 °C to carry out a coupling reaction. 2 hours after the start of the coupling reaction, 1.0 g of 2-propanol was added. To this polymer solution were added 80 g of an Ni/silica·alumina catalyst (65 wt% of Ni carried), 800 g of cyclohexane and 700 g of methyl t-butyl ether to carry out a hydrogenation reaction at a hydrogen pressure of 9.8 MPa (100 kgf/cm²) and a temperature of 180° C for 6 hours. After the temperature was returned to normal temperature and the inside of the autoclave was fully substituted by nitrogen, the solution was taken out from the autoclave and filtered with a membrane filter having a pore diameter of 0.1 µm (Fluoropore of Sumitomo Electric Industries, Ltd.) under pressure to obtain an achromatic transparent solution. The copolymer had a reduced viscosity ηₛₚ/c of 0.39 dL/g. It was found from GPC measurement that the copolymer was a mixture of 25 % of a component having a number average molecular weight of 43,000 and corresponding to one branched chain, 61 % of a component corresponding to 3 or 4 branched chains and 14 % of a component corresponding to 2 branched chains. The hydrogenation rate was found to be 99 mol% by ¹H-NMR measurement.

Separately from this, 500 g of a polystyrene homopolymer (Type 158K of BASF Co., Ltd. having a weight average molecular weight of 280,000) was dissolved in a mixed solvent of 2,400 g of cyclohexane and 1,600 g of methyl t-butyl ether to carry out a hydrogenation reaction and filtration in the same manner as described above so as to obtain an achromatic transparent solution of hydrogenated polystyrene. The hydrogenated polystyrene had a reduced viscosity ηₛₚ/c of 0.50 dL/g. The hydrogenation rate was found to be 99 mol% by ¹H-NMR measurement.

The thus obtained both solutions were mixed together such that the weight ratio of the hydrogenated styrene-isoprene copolymer to the hydrogenated polystyrene was 50/50, and the Sumilizer GS as a stabilizer and glycerin monostearate as a turbidness preventing agent were added in amounts of 0.5 wt% and 0.2 wt% based on the total of all the polymers, respectively. The mixed solution was heated and depressurized in a sealed system to prevent entry of foreign matter from the outside so as to distill off the solvent and then pelletized by an extruder having an output port existent in a clean room to obtain an achromatic transparent polymer. The resin composition had a reduced viscosity ηₛₚ/c of 0.44 dL/g and a melt viscosity measured at 300°C of 250 Pa·s at a shear rate of 10²s⁻¹ and 89 Pa·s at a shear rate of 10³s⁻¹. When the pellet was dissolved in cyclohexane to count foreign substances having a particle diameter of 0.5 µm or more, there were 3,500 foreign substances per g.

When a DVD-RAM disk was molded from this resin at a cylinder temperature of 320° C and an injection mold temperature of 120° C on a movable side and 125° C on a fixed side, the replicability was sufficiently high and the distortion of the disk after lamination was small.

After a high-temperature and high-humidity test was made on this disk at a temperature of 80°C and a humidity of 85 % for 500 hours, no change in the transparency of the disk was seen.

### Example 6

Polymerization, coupling and hydrogenation reactions were carried out in the same manner as in Example 5 to obtain a hydrogenated styrene-isoprene copolymer solution except that the amounts of the monomers used for polymerization were changed to 904 g of styrene and 160 g of isoprene, the amount of sec-butyl lithium as a polymerization initiator was changed to 25.0 mmols, and the amount of tetramethoxysilane as a coupling agent was changed to 0.89 g. The copolymer had a reduced viscosity ηₛₚ/c of 0.37 dL/g. It was found from GPC measurement that the copolymer was a mixture of 23 % of a component having a number average molecular weight of 40,000 and corresponding to one branched chain, 65 % of a component corresponding to 3 or 4 branched chains and 12 % of a component corresponding to 2 branched chains. The hydrogenation rate was found to be 99 mol% by ¹H-NMR measurement.

This copolymer solution and the solution of hydrogenated polystyrene obtained in Example 5 were mixed together such that the weight ratio of the hydrogenated styrene-isoprene copolymer to the hydrogenated polystyrene was 33/67, and the Sumilizer GS as a stabilizer was added in an amount of 0.5 wt% based on the total of all the polymers. Thereafter, the solvent was distilled off and pelletization was carried out in the same manner as in Example 5 to obtain an achromatic transparent polymer. The resin composition had a reduced viscosity ηₛₚ/c of 0.44 dL/g and a melt viscosity measured at 300° C of 340 Pa·s at a shear rate of 10²s⁻¹ and 97 Pa·s at a shear rate of 10³s⁻¹.

A DVD-RAM disk was molded from this resin at a cylinder temperature of 320° C and an injection mold temperature of 120°C on a movable side and 125°C on a fixed side. The replicability of a stamper was sufficiently high and the distortion of the disk after lamination was small.

### Example 7 and Comparative Example 1

To compare the disk moldability of a hydrogenated styrene-isoprene copolymer having a star-like branched structure with that of a hydrogenated styrene-isoprene copolymer having a linear structure, a linear hydrogenated styrene-isoprene copolymer having almost the same content of isoprene and the same melt flowability as the copolymer obtained in Example 1 was synthesized.

After the inside of a 10-liter stainless steel autoclave was fully dried and substituted by nitrogen, 3,350 g of cyclohexane and 278 g of styrene were fed to the autoclave. Subsequently, 6.3 mmols of n-butyl lithium was added to start polymerization. After styrene was completely reacted by stirring at 45° C for 2 hours, 61 g of isoprene was added to carry out a reaction at 50°C for 2 hours. 287 g of styrene was then added to further continue the reaction at 50° C for 2 hours and then 0.5 g of 2-propanol was added. To this copolymer solution were added 50 g of an Ni/silica·alumina catalyst (65 wt% of Ni carried), 500 g of cyclohexane and 700 g of methyl t-butyl ether to carry out a hydrogenation reaction at a hydrogen pressure of 9.8 MPa (100 kgf/cm²) and a temperature of 180° C for 4 hours. Thereafter, filtration, addition of a stabilizer, vacuum concentration and flushing were carried out in the same manner as in Example 1 to obtain a bulk achromatic transparent copolymer. The copolymer had a reduced viscosity ηₛₚ/c of 0.43 dL/g and a melt viscosity measured at 300° C of 288 Pa·s at a shear rate of 10²s⁻¹ and 81 Pa·s at a shear rate of 10³s⁻¹. The hydrogenation rate was found to be 99 mol% by ¹H-NMR measurement. The glass transition temperature measured by DSC was 145°C.

DVD-RAM disks were molded from the above linear hydrogenated styrene-isoprene copolymer and the copolymer obtained in Example 1 at a cylinder temperature of 320° C and an injection mold temperature of 120° C on a movable side and 125° C on a fixed side. When retardation was measured, the disk obtained from the copolymer of Example 1 had a retardation of 1.5 nm (vertically incident beam) and 3.2 nm (incident beam at an angle of 30° ) and the disk obtained from the linear copolymer had a retardation of 6.4 nm (vertically incident beam) and 8.4 nm (incident beam at an angle of 30° ). That is, the retardation of the disk obtained from the linear copolymer was larger. The distortion of the disk obtained from the linear copolymer was larger than that of the disk obtained from the copolymer obtained in Example 1. Therefore, the disk obtained from the linear copolymer could not be laminated.

### Example 8 and Comparative Example 2

In order to find how much a blend of the linear hydrogenated styrene-isoprene copolymer and hydrogenated polystyrene and a blend of the hydrogenated styrene-isoprene copolymer having a star-like branched structure and hydrogenated polystyrene differ from each other in melt viscosity, the linear hydrogenated styrene-isoprene copolymer was synthesized as below.

140 g of cyclohexane, 3.6 g of isoprene and 20.4 g of styrene were added to a 300-ml glass autoclave whose inside had been fully dried and substituted by nitrogen, and 0.22 mmol of n-butyl lithium was added to carry out polymerization at 50° C for 3 hours. After a trace amount of isopropanol was added, the polymer solution was transferred to a 1-liter autoclave and 80 g of methyl t-butyl ether and 5 g of an Ni/silica·alumina catalyst were added to carry out a hydrogenation reaction at a hydrogen pressure of 9.8 MPa (100 kgf/cm²) and a temperature of 180° C for 6 hours. Thereafter, a post-treatment was carried out in the same manner as in Example 1. The obtained hydrogenated styrene-isoprene copolymer had a reduced viscosity ηₛₚ/c of 0.43 dL/g which was measured at 30°C in a toluene solution having a concentration of 0.5 g/dL.

The thus obtained copolymer had a melt viscosity of 190 Pa·s at a shear rate of 10²s⁻¹ and 64 Pa·s at a shear rate of 10³s⁻¹ which was almost the same as the melt viscosity of Example 3. The copolymer and the copolymer having a star-like branched structure which was synthesized in Example 3 and had almost the same melt viscosity were blended with hydrogenated polystyrene in a weigh ratio of 50/50 and the melt viscosities of the resulting two blends were measured and compared. The results are shown in Table 3. As understood from Table 3, a blend of the copolymer having a star-like branched structure and hydrogenated polystyrene had lower melt viscosity, that is, higher flowability than a blend of the linear copolymer and hydrogenated polystyrene.

The above hydrogenated polystyrene was produced by dissolving 400 g of a polystyrene homopolymer (Type158K of BASF Co., Ltd. having a weight average molecular weight of 280,000) in a mixed solvent of 1,200 g of cyclohexane and 800 g of methyl t-butyl ether and carrying out a hydrogenation reaction likewise.

**Table 3**

| | Ex. 8 | C.Ex. 2 |
|---|---|---|
| melt viscosity (300°C) | | |
| shear rate10²s⁻¹ (Pa·s) | 220 | 270 |
| shear rate10³s⁻¹(Pa·s) | 79 | 82 |
| Ex. = Example | | |
| C.Ex. = Comparative Example | | |

## Claims

1. An optical molding material comprising a hydrogenated product of a styrene-conjugated diene block copolymer having a star-like branched structure consisting of a core and branched chains extending linearly therefrom, each of the branched chains comprising a styrene component and a conjugated diene component in amounts of 70 to 99 wt% and 30 to 1 wt% based on the total weight of the both components, respectively, the hydrogenated product being obtained by hydrogenating 90 mol% or more of all the double bonds of the styrene component and the conjugated diene component.

2. The optical molding material of claim 1, wherein the hydrogenated product is obtained by hydrogenating 98 mol% or more of all the double bonds of the styrene component and conjugated diene component of the styrene-conjugated diene block copolymer.

3. The optical molding material of claim 1, wherein the hydrogenated product is obtained by hydrogenating 90 to 99.5 mol% of all the double bonds of the styrene component and conjugated diene component of the styrene-conjugated diene block copolymer and has substantially no signal having a peak at a range of 6.3 to 6.8 ppm in its ¹H-NMR spectrum measured at room temperature in deuterochloroform.

4. The optical molding material of claim 1, wherein the star-like branched structure consists of a core and 3 to 4 branched chains extending linearly therefrom.

5. The optical molding material of claim 1, wherein the branched chains have a styrene block at a free terminal thereof.

6. The optical molding material of claim 1, wherein each of the branched chains is composed of a styrene-conjugated diene block copolymer and the styrene-conjugated diene block copolymer contains a styrene component in an amount of 84 to 96 wt% and a conjugated diene component in an amount of 4 to 16 wt% based on the total weight of the styrene and conjugated diene components.

7. The optical molding material of claim 1, wherein each of the branched chains of the hydrogenated product is composed of a hydrogenated product of a styrene-conjugated diene block copolymer and the number average molecular weight (Mn) of each branched chain measured by GPC is 30,000 to 70,000.

8. The optical molding material of claim 1 which has a heat distortion temperature of 90°C or more.

9. The optical molding material of claim 1, wherein the hydrogenated product has a reduced viscosity ηₛₚ/c of 0.2 to 0.65 which was measured at 30° C in a toluene solution having a concentration of 0.5 g/dL.

10. The optical molding material of claim 1, wherein the core of the styrene-conjugated diene block copolymer is derived from an alkoxysilane.

11. The optical molding material of claim 1 which contains not more than 20,000 foreign substances per g having a particle diameter of 0.5 µm or more.

12. The optical molding material of claim 1 which further contains a turbidness preventing agent in an amount of 0.01 to 5 wt% based on the hydrogenated product.

13. An optical molding material comprising a resin composition which contains (a) the hydrogenated product specified in claim 1 in an amount of 20 to 80 wt% and (b) hydrogenated polystyrene obtained by hydrogenating 90 mol% or more of the unsaturated bonds of the aromatic rings of polystyrene in an amount of 80 to 20 wt% based on the total weight of the hydrogenated product (a) and the hydrogenated polystyrene (b).

14. The optical molding material of claim 13, wherein the styrene-conjugated diene block copolymer of the hydrogenated product (a) contains a styrene component in an amount of 84 to 96 wt% and a conjugated diene component in an amount of 4 to 16 wt%.

15. The optical molding material of claim 13 or 14, wherein each of the branched chains of the hydrogenated product (a) is composed of a hydrogenated product of a styrene-conjugated diene block copolymer and the number average molecular weight (Mn) of each branched chain measured by GPC is 30,000 to 70,000.

16. The optical molding material of claim 13 or 14 which has a heat distortion temperature of 90°C or more.

17. The optical molding material of claim 13 or 14, wherein the reduced viscosity ηₛₚ/c of the hydrogenated product (a) measured at 30° C in a toluene solution having a concentration of 0.5 g/dL is 0.2 to 0.65.

18. The optical molding material of claim 13 which contains not more than 20,000 foreign substances having a particle diameter of 0.5 µm or more per g.

19. The optical molding material of claim 13 which further contains a turbidness preventing agent in an amount of 0.01 to 5 wt% based on the hydrogenated product.

20. A process for producing a hydrogenated product of a styrene-conjugated diene block copolymer, comprising the steps of:
anionically polymerizing monomers containing styrene and a conjugated diene to form a styrene-conjugated diene block copolymer having one active terminal;
coupling the active terminals of the styrene-conjugated diene block copolymers by means of an alkoxysilane to form a styrene-conjugated diene block copolymer having a star-like branched structure; and
hydrogenating the styrene-conjugated diene block copolymer having a star-like branched structure to form a hydrogenated product of the styrene-conjugated diene block copolymer having a star-like branched structure.

21. A process for producing a hydrogenated product of a styrene-conjugated diene block copolymer, comprising the steps of:
anionically polymerizing monomers containing styrene and a conjugated diene to form a styrene-conjugated diene block copolymer having one active terminal;
coupling the active terminals of the styrene-conjugated diene block copolymers by means of an aromatic hydrocarbon having at least two groups having a vinyl group as substituents to form a styrene-conjugated diene block copolymer having a star-like branched structure; and
hydrogenating the styrene-conjugated diene block copolymer having a star-like branched structure to form a hydrogenated product of the styrene-conjugated diene block copolymer having a star-like branched structure.

22. An optical disk substrate made from the optical material of any one of claims 1 to 19.
